# EUROPÄISCHE PATENTANMELDUNG

(11) **EP 1 841 032 A1**
(43) Veröffentlichungstag der Anmeldung: **03.10.2007**
(21) Anmeldenummer: 06112089.5
(22) Anmeldetag: 31.03.2006
(51) Int. Cl.: H02G 15/04, H02G 3/22

(54) **Hitzebeständige Leitungsdurchführung**

(71) Anmelder: G. Kromschröder Aktiengesellschaft, D-49074 Osnabrück (DE)
(72) Erfinder: Bertke, Heinrich, 49134 Wallenhorst (DE); Meineke, Swen, 49076 Osnabrück (DE)
(74) Vertreter: Schmidt, Frank-Michael

(57) **Zusammenfassung**

Die Erfindung betrifft eine hitzebeständige Leitungsdurchführung für ein Gaszählergehäuse. Bei der Leitungsdurchführung sind Dichtmittel (15) vorgesehen, die aus einem in einem Temperaturbereich unterhalb einer ersten Temperatur beständigen und dichtenden ersten Material bestehen. Außerdem weist die Leitungsdurchführung Begrenzungsmittel (17, 18) auf, die aus wenigstens einem in einem Temperaturbereich oberhalb der ersten Temperatur beständigen zweiten Material gebildet sind. Die Begrenzungsmittel (17, 18) sind derart ausgebildet, daß ein durch die Leitungsdurchführung strömender Gasstrom auf ein vorgegebenes Volumen pro Zeiteinheit begrenzbar ist. Die Begrenzungsmittel gewährleisten, daß im Fall von Hitzeeinwirkungen, durch welche die Dichtmittel (15) ihre Dichtwirkung verlieren, der durch die Leitungsdurchführung strömende Gasstrom ein maximal tolerierbares Volumen pro Zeiteinheit nicht übersteigt.

## Beschreibung

Die vorliegende Erfindung betrifft eine hitzebeständige Leitungsdurchführung. Insbesondere betrifft die Erfindung eine Leitungsdurchführung für ein Gaszählergehäuse.

Derartige Leitungsdurchführungen weisen Dichtmittel auf, die aus einem in einem Temperaturbereich unterhalb einer ersten Temperatur beständigen und dichtenden ersten Material bestehen.

Leitungsdurchführungen dienen dem Zweck, einen gezielten Austausch von Stoffen, Energie oder Signalen durch eine Barriere hindurch zu ermöglichen. Bei Zählern für Brennstoffe oder sonstige Verbrauchszähler sollen Spannungssignale zwischen einem Gehäuseinnenraum und einem Außenraum ausgetauscht werden oder eine Stromversorgung soll bereitgestellt werden. Dabei muß die Leitungsdurchführung jedoch den Gehäuseinnenraum gegen einen unkontrollierten Stoffaustausch mit dem Außenraum abdichten. An eine derartige Abdichtung werden je nach Einsatzgebiet des Gehäuses unterschiedliche Anforderungen gestellt. Bei Gaszählergehäusen soll sichergestellt werden, daß der Innenraum des Gaszählergehäuses gasdicht gegenüber dem Außenraum abgedichtet ist. Da in den meisten Gaszählergehäusen der Gasdruck gering ist, reicht für eine Abdichtung unter Standardbedingungen meist eine entsprechend geformte und flexible Elastomer oder Kunststoffdichtung. Diese dichtet, meist die Leitung umgebend, den Querschnitt der Durchführung zwischen einer Gehäusewand und der Leitung. Derartige Dichtungen haben jedoch den Nachteil, daß sie im Falle starker Hitzeeinwirkungen, wie z.B. im Brandfall, ihre Dichtwirkung verlieren (spätestens ab etwa 300° C)und eine durchströmbare Fluidverbindung zwischen dem Innenraum des Gaszählers und dem Außenraum freigeben.

Es ist bei Gaszählergehäusen sicherzustellen, daß aus dem Gaszählergehäuse von dem Zeitpunkt der Undichtigkeit aufgrund einer Hitzeeinwirkung und bis zur weiteren Erhitzung bis auf Zündtemperatur des Gases, die ausströmende Gasmenge derart begrenzt ist, daß kein explosionsfähiges Gemisch im Außenraum des Gaszählers vorliegt. Die Prüf- und Anforderungsbedingungen der Norm EN1359 fordern beispielsweise, daß nach Erreichen der Prüftemperatur von 650° C für 30 Minuten eine Leckrate von 150 l/h für das gesamte Zählergehäuse nicht überschritten wird.

Aus diesem Grund sind im Stand der Technik hitzebeständige Durchführungen bekannt, bei denen die Dichtmittel aus einem keramischen Material gebildet sind. Durch dieses Material sind elektrische Leitungen geführt. Der Keramikkörper hält den im Brandfall auftretenden Temperaturen ausreichend lange stand. Es reicht dabei aus, daß die Durchführung bis zum Erreichen der Zündtemperatur des Gases ausreichend dichtet, weil oberhalb dieser Temperatur austretendes Gas sofort abgefackelt wird und nicht die Gefahr einer Explosion besteht. Derartige Dichtungen mit keramischen Dichtmitteln sind jedoch aufwendig in der Montage, teuer in der Herstellung und unflexibel in der Handhabung, da jeweils einzelne, unisolierte Leitungen in eine Keramik eingeschlossen sind.

Es ist Aufgabe der Erfindung, eine hitzebeständige Leitungsdurchführung für ein Gaszählergehäuse zur Verfügung zu stellen, welche einen einfach montierbaren Aufbau bietet.

Die Aufgabe wird erfindungsgemäß gelöst durch eine Leitungsdurchführung mit den Merkmalen des Patentanspruchs 1, sowie durch ein Gaszählergehäuse mit den Merkmalen des Patentanspruchs 12.

Die erfindungsgemäße Leitungsdurchführung weist Begrenzungsmittel auf, die aus einem in einem Temperaturbereich oberhalb der ersten Temperatur beständigen zweiten Material gebildet sind und die derart ausgebildet sind, daß ein durch die Leitungsdurchführung strömender Gasstrom auf ein vorgegebenes Volumen pro Zeiteinheit begrenzbar ist.

Zusätzlich zu den Dichtmitteln, die die Leitungsdurchführung in einem Temperaturbereich unterhalb einer ersten Temperatur gasdicht abdichten, sind die Begrenzungsmittel separat oder mit den Dichtmitteln verbunden vorgesehen. Die Begrenzung durch die Begrenzungsmittel erfolgt insbesondere dann, wenn die Dichtmittel keine (oder nur verminderte) Dichtwirkung entfalten, z.B. da sie aufgrund von Hitzeeinwirkung geschmort, geschmolzen oder verbrannt sind. In diesem Fall ist die Leitungsdurchführung von Gas durchströmbar. Die erste Temperatur, unterhalb derer die Dichtmittel beständig sind und dichtende Wirkung entfalten, ist derart vorzugeben, daß bei üblichen Umgebungsbedingungen des Gaszählers die erste Temperatur nicht überschritten wird. Der Temperaturbereich, in dem das erste Material beständig und dichtend ist, kann sich von einer Minimaltemperatur bis zu der ersten Temperatur erstrecken. Typische Werte für die erste Temperatur liegen zwischen 80°C und 200°C. Es gibt zahlreiche als Dichtmaterial geeignete Stoffe, die unterhalb einer Temperatur aus diesem Bereich in geeigneter Weise dichten (z.B. Silikon, Viton, NBR-nitrile butadiene rubber). Jedoch können als Material für die Dichtmittel auch sonstige Materialien, wie z.B. Fasern oder Harze verwendet werden.

Die Begrenzungsmittel sind üblicherweise ebenfalls in dem gesamten Temperaturbereich beständig, in dem auch die Dichtmittel beständig sind. Jedoch ist für die Erfindung wesentlich, daß sie in einem Temperaturbereich oberhalb der ersten Temperatur beständig sind. Diese Bedingung erfüllen beispielsweise Metalle, Keramiken oder Gläser. Die Begrenzungsmittel sind in der Durchführung so anzuordnen, daß sie den Gasfluß durch die Durchführung begrenzen können. Beispielsweise belegen sie einen Teil des Querschnitts der Leitungsdurchführung, um im üblichen Betrieb Platz für die durchzuführende Leitung freizugeben. Der freie Querschnitt, welcher nicht von den Begrenzungsmitteln gesperrt ist, ist jedoch so gewählt, daß oberhalb der ersten Temperatur und bei einer maximal zu erwartenden Druckdifferenz zwischen Innenraum und Außenraum des Gaszählergehäuses ein durchströmender Gasstrom begrenzt wird. Der freie Querschnitt ist so zu bemessen, daß selbst bei völligem Fehlen der Dichtmittel und bei höchstmöglich zu erwartender Druckdifferenz das ausströmende Gasvolumen geringer ist, als ein Volumen, welches ein explosionsfähiges Gemisch bilden kann.

Vorzugsweise enthält das erste Material, aus dem die Dichtmittel gebildet sind, ein flexibles Elastomer oder mehrere flexible Elastomere, wie z.B. Gummi, Viton oder sonstige. Dichtkunststoffe eignen sich bei geringen Druckdifferenzen besonders gut, um mit einfachen mechanischen Mitteln eine gasdichte Verbindung zu bilden. Derartige Dichtmittel können z.B. als Stopfen, Häute oder Ringe ausgebildet sein. Eine Leitung kann an den Dichtmitteln vorbei oder durch diese hindurchgeführt sein und die Dichtmittel können zur Abdichtung des freien Querschnitts der Leitungsdurchführung in Form gepreßt oder gequetscht werden.

Vorzugsweise enthält das zweite Material, aus dem die Begrenzungsmittel gebildet sind, ein Metall oder Keramik.

Diese Werkstoffe sind einerseits üblicherweise bei den im Brandfall auftretenden Temperaturen zumindest zeitweise hitzebeständig und sind außerdem leicht zu bearbeiten und zu formen. Die Begrenzungsmittel können daher leicht in die gewünschte Form gebracht werden.

Außerdem weisen viele Metalle die Eigenschaft auf, sich bei zunehmender Temperatur auszudehnen. Diese Eigenschaft kann bei der Erfindung ausgenutzt werden, da die Begrenzungsmittel derart ausgebildet sein können, daß der von ihnen versperrte Querschnitt der Durchführung unter normalen Betriebsbedingungen (niedrige Temperatur) kleiner ist als der versperrte Querschnitt bei höheren Temperaturen (Brandfall). Wesentlich ist, daß bei im Brandfall anzunehmenden Temperaturen der von den Begrenzungsmitteln freigegebene Querschnitt bei den zu erwartenden Druckdifferenzen eine unkritische Menge Gas pro Zeiteinheit durch die Durchführung strömen läßt.

Vorzugsweise weisen die Dichtmittel eine Ausnehmung zur Aufnahme einer Leitung auf oder/und die Begrenzungsmittel weisen eine Ausnehmung zur Aufnahme einer Leitung auf.

Je nach dem was für eine Leitungsform gewählt ist, kann die Ausnehmung angepaßt sein, um eine bestmögliche Dichtwirkung zwischen Dichtmitteln und Leitung zu gewährleisten. Die Ausbildung einer entsprechenden Aufnahme in den Begrenzungsmitteln (die meist aus einem mechanisch härteren Material als Dichtmittel gebildet sind) gewährleistet insbesondere, daß die Leitung ohne Quetschungen und Beschädigungen an den Begrenzungsmitteln vorbei oder durch diese hindurch führbar ist.

Zur einfachen Montage weist die Durchführung vorzugsweise eine Fassung oder Hülse auf, die mit Befestigungsmitteln, z.B. einem Gewinde, in einer entsprechen Bohrung oder Gegenfassung in der Gehäuse des Gaszählers befestigbar ist. Die Dichtmittel und Begrenzungsmittel können in der Fassung vorzugsweise axial hintereinander angeordnet werden. Die durchzuführende Leitung kann dann durch die Dicht- und Begrenzungsmittel geführt werden, so daß diese die Leitung umschließen.

Es ist besonders vorteilhaft, wenn die Begrenzungsmittel mehrteilig ausgebildet sind.

Eine mehrteilige Ausbildung der Begrenzungsmittel, z.B. als Halbschalen, erleichtert insbesondere die Montage einer erfindungsgemäßen Leitungsdurchführung. Da die Begrenzungsmittel nicht auf die vollständige Abdichtung des Durchführungsquerschnitts ausgelegt sein brauchen, können durchaus Spalte zwischen den einzelnen Teilen der Begrenzungsmittel verbleiben.

Es ist außerdem möglich, die Dichtmittel und die Begrenzungsmittel als ein integrales Bauteil auszubilden, z.B. indem ein in den Begrenzungsmitteln freier Querschnitt mit dem Material der Dichtmittel gefüllt ist, durch welches die Leitung geführt ist. Auch kann z.B. ein Metallstopfen als Begrenzungsmittel mit einem flexiblem Mantel oder Dichtring versehen werden. Im Brandfall entfällt zwar die Dichtwirkung des flexiblen Mantels oder Dichtrings, der Metallstopfen blockiert jedoch immer noch ausreichende Teile des Querschnitts der Durchführung, um den Gasfluß zu begrenzen.

Vorteilhafte Ausführungen der Erfindung sind in den weiteren Ansprüchen angegeben.

Die Erfindung wird nun anhand einer bevorzugten Ausführungsform anhand der beiliegenden Figuren näher erläutert.

Figur 1 zeigt eine schematische Frontansicht einer keramischen Leitungsdurchführung nach dem Stand der Technik.

Figur 2 zeigt eine perspektivische Darstellung der keramischen Leitungsdurchführung aus Figur 1.

Figur 3 zeigt eine schematische Explosionsansicht einer erfindungsgemäßen Leitungsdurchführung.

Figur 4 zeigt die Leitungsdurchführung gemäß Figur 3 im montierten Zustand.

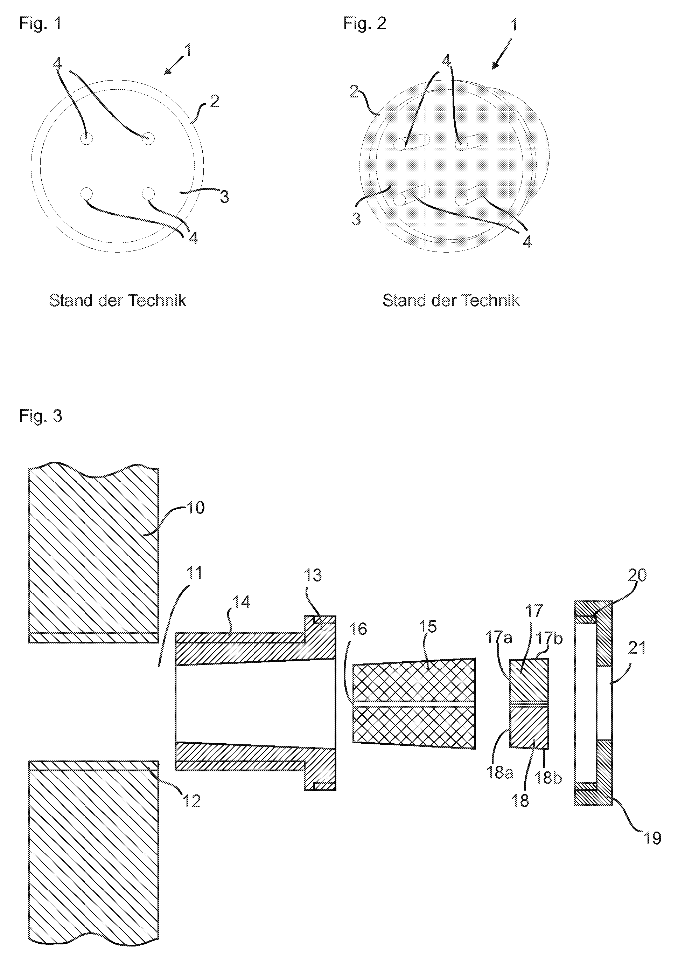

Figur 1 zeigt eine keramische Durchführung 1 mit einem metallischen Rahmen oder Mantel 2, in dem ein keramisches Material 3 angeordnet ist. In dem keramischen Material 3 sind elektrische Leiter 4 eingebrannt. Zwischen den Leitungen 4, dem Material 3 und dem Mantel 2 ist jeweils eine gasdichte Verbindung gebildet. Figur 2 zeigt die Durchführung perspektivischer Ansicht. Die Leitungen 4 sind unisoliert und unmarkiert durch das keramische Material 3 geführt. Diese Umstände erfordern einerseits eine beidseitige Anpassung der anzuschließenden Einrichtung an die Kontakte der Durchführung und andererseits eine aufwendige Prüfung der Kontaktbelegungen. Figur 3 zeigt schematisch eine Explosionsdarstellung einer erfindungsgemäßen Leitungsdurchführung. Die Durchführung ist in einer Wandung 10 eines Gaszählergehäuses zu montieren. In der Wandung 10 ist eine Öffnung 11 ausgebildet, die durch ein Gewinde 12 begrenzt ist. Eine Hülse 13, mit einem dem Innengewinde 12 entsprechenden Außengewinde 14 kann in die Öffnung 11 eingeschraubt werden. Die Hülse 13 ist aus Metall (z.B. Messing) gefertigt und weist innen eine Kegelbohrung auf, welche sich in Richtung des Außenraums (in der Zeichnungsebene links) verjüngt. Ein mit seinen Abmessungen auf die in der Hülse 13 ausgebildete Kegelbohrung angepaßter Kegelstumpf 15 ist aus einem Elastomer (zum Beispiel aus NBR nitrile-butadien-rubber) gebildet. Der Kegelstumpf 15 ist in die Kegelbohrung der Hülse 13 einsteckbar und darin als Dichtmittelpackung einpressbar, so daß zwischen Kegelstumpf 15 und Hülse 13 eine dichte Verbindung geschaffen ist.

In dem Kegelstumpf 15 ist eine durchgehende Öffnung 16 ausgebildet, durch die ein Flachbandkabel (nicht gezeigt) führbar ist. Die Ausnehmung ist demnach als dem Profil des Flachbandkabels angepaßter Durchgangsschlitz entlang der Symmetrieachse des Kegelstumpfs ausgebildet.

Als Begrenzungsmittel sind zwei halbschalige Metallteile 17 und 18 ausgebildet, die jeweils nahezu halbkreisförmige Frontflächen 17A bzw. 18A aufweisen. Die radial äußeren Begrenzungen 17B bzw. 18B sind in ihrer Steigung an die Schräge der Kegelbohrung in der Hülse 13 angepaßt.

Eine Überwurfmutter 19 mit einem Innengewinde 20 ist so bemessen, daß sie auf ein entsprechendes Außengewinde 14A der Hülse 13 schraubbar ist. Die Überwurfmutter weist eine Ausnehmung 21 auf, durch die die durchzuführende Leitung führbar ist. Die Überwurfmutter 19 schließt die Leitungsdurchführung auf der Gehäuseinnenseite des Gaszählergehäuses ab.

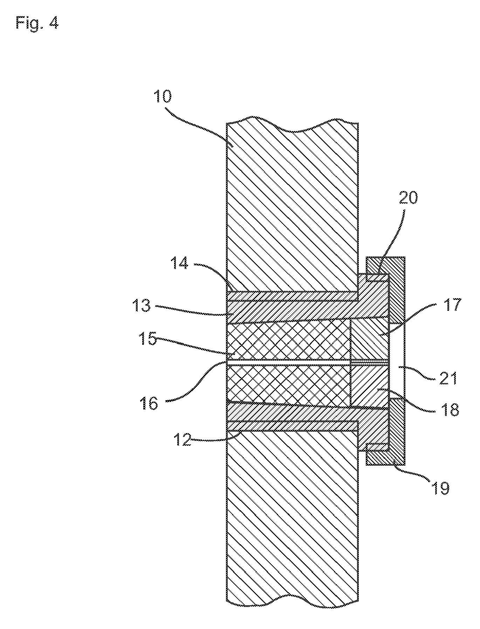

In Figur 4 sind die in Figur 3 gezeigten Bauteile der erfindungsgemäßen Leitungsdurchführung im montierten Zustand gezeigt. Die Hülse 13 ist mit ihrem Außengewinde 14 in das Innengewinde 12 der Wandung 10 eingeschraubt. Beim Aufschrauben gleitet die Überwurfmutter 19 and den halbschaligen Teilen 17 und 18 ab und drückt diese in die Kegelbohrung. Der Dichtungs-Kegelstumpf 15 liegt dichtend an der Kegelbohrung der Hülse 13 an. Die Halbschalen 17 und 18 der Begrenzungsmittel liegen in der zur Gehäuseinnenseite weisenden Stirnseite des Kegelstumpfs 15 an und verdichten den Kegelstumpf in Richtung der sich verjüngenden Kegelbohrung in der Hülse 13, um die Dichtwirkung sicherzustellen. Bei Verdichten der Dichtmittel während der Montage drückt sich eine durchgeführte Leitung nämlich in das flexible Material des Kegelstumpfs 15 ein. Die auf die Hülse 13 aufgeschraubte Überwurfmutter 19 fixiert die Bauteile und hält die Dichtmittel in verdichteter Stellung. In diesem montierten Zustand dichten die Dichtmittel 15 bei üblichen Betriebsbedingungen den Gasinnenraum (in Zeichnungsebene rechts) gegen den Außenraum (in Zeichnungsebene links) ab.

Im Brandfall erhitzt sich die Durchführung und das Material der Dichtmittel wird weich, porös oder angeschmolzen und verliert seine dichtende Wirkung. In diesem Fall wird durch die Hülse 13, die Teile 17 und 18 der Begrenzungsmittel aus hitzebeständigen Materialien ein Querschnitt freigegeben, durch welchen ein Gasstrom auf ein maximales und tolerierbares Maß begrenzt wird. Der freie Querschnitt kann dabei kleiner werden, wenn sich das Material der Teile 17 und 18 (hier aus Metall) bei zunehmender Temperatur ausdehnt. Außerdem können die Teile 17 und 18 durch den Gasdruck im Innenraum weiter in Richtung der sich verjüngenden Bohrung in der Hülse gedrückt werden, da dann der Widerstand des Kegelstumpfes 15 abnimmt. Dies trägt zu einer weiteren Verengung des Gasdurchlasses bei.

Diese Ausführungsform der Erfindung ist einfach und günstig manuell oder maschinell zu montieren und bedarf keiner teueren Komponenten. Die Durchführung ist außerdem für zahlreiche Arten von Leitungen geeignet. In den Dichtmitteln und den Begrenzungsmitteln können auf die Leitungen angepaßte Ausnehmungen vorgesehen werden, z.B. als Bohrungen, Schlitze oder Ausnehmungen im Randbereich.

Im Rahmen der Erfindung sind zahlreiche Abwandlungen denkbar, so können z.B. Dichtmittel und die Begrenzungsmittel zu einem zu verbauenden Bauteil verbunden sein. Beispielsweise kann eine Scheibe aus einem hitzebeständigen Material eine Durchführungsöffnung aufweisen, durch die ein Flachkabel geführt ist, wobei der Zwischenraum zwischen Flachkabel und Begrenzungsmittel durch einen flexiblen Kunststoff als Dichtmittel gedichtet ist (z.B. durch Einspritzen). Im Brandfall wird dann ggf. das Dichtmittel angegriffen, der Querschnitt der Begrenzungsmittel bleibt jedoch für den Gasstrom blockiert.

## Patentansprüche

1. Leitungsdurchführung für ein Gaszählergehäuse, mit Dichtmitteln (15), die aus einem in einem Temperaturbereich unterhalb einer ersten Temperatur beständigen und dichtenden ersten Material bestehen,
**dadurch gekennzeichnet,**
**daß** die Leitungsdurchführung Begrenzungsmittel (17, 18) aufweist, die aus wenigstens einem in einem Temperaturbereich oberhalb der ersten Temperatur beständigen zweiten Material gebildet und derart ausgebildet sind, daß ein durch die Leitungsdurchführung strömender Gasstrom auf ein vorgegebenes Volumen pro Zeiteinheit begrenzbar ist.

2. Leitungsdurchführung nach Anspruch 1, **dadurch gekennzeichnet, daß** das erste Material einen flexiblen Kunststoff oder ein Elastomer enthält.

3. Leitungsdurchführung nach Anspruch 1 oder 2, **dadurch gekennzeichnet, daß** das zweite Material ein Metall oder eine Keramik enthält.

4. Leitungsdurchführung nach einem der Ansprüche 1 bis 3, **dadurch gekennzeichnet, dass** die Leitungsdurchführung eine Fassung (13) aufweist, in der die Dichtmittel (15) und die Begrenzungsmittel (17, 18) haltbar sind.

5. Leitungsdurchführung nach Anspruch 4, **dadurch gekennzeichnet, daß** die Fassung aus Metall oder Keramik gebildet ist.

6. Leitungsdurchführung nach Anspruch 4 oder 5, **dadurch gekennzeichnet, dass** die Fassung (13) Befestigungsmittel (14) zum befestigen der Leitungsdurchführung in einer Gehäuse-Durchgangsöffnung (11) aufweist.

7. Leitungsdurchführung nach Anspruch 6, **dadurch gekennzeichnet, dass** die Befestigungsmittel (14) ein Umfangsgewinde aufweisen, das in ein Innengewinde (12) einer Gehäusebohrung einschraubbar ist.

8. Leitungsdurchführung nach Anspruch 6, **dadurch gekennzeichnet, dass** die Befestigungsmittel (14) ein Umfangsgewinde aufweisen und mit einer Mutter in einer Gehäusebohrung befestigbar sind.

9. Leitungsdurchführung nach einem der Ansprüche 4 bis 8, **dadurch gekennzeichnet, daß** die Dichtmittel (15) und die Begrenzungsmittel (17, 18) die durchzuführende Leitung umfassen und axial hintereinander angeordnet sind.

10. Leitungsdurchführung nach Anspruch 9, **dadurch gekennzeichnet, dass** die Leitungsdurchführung mit einer Überwurfmutter (19) abgeschlossen ist.

11. Leitungsdurchführung nach Anspruch 10, **dadurch gekennzeichnet, dass** die Überwurfmutter (19) die Begrenzungsmittel (17, 18) bildet.

12. Leitungsdurchführung nach einem der Ansprüche 10 oder 11, **dadurch gekennzeichnet, dass** die Fassung (13) eine zumindest teilweise konische Aufnahme für eine zumindest teilweise konisch ausgebildete Dichtmittelpackung (15) bildet, in welcher die Dichtmittelpackung von der montierten Überwurfmutter (19) verdichtbar ist.

13. Leitungsdurchführung nach einem der Ansprüche 1 bis 12, **dadurch gekennzeichnet, dass** die Begrenzungsmittel (17, 18) zweischalig zum Umschließen der durchzuführenden Leitung ausgebildet sind.

14. Gaszählergehäuse mit wenigstens einer in einer Gehäusewandung (10) befestigten Leitungsdurchführung nach einem der Ansprüche 1 bis 13.
